# EUROPÄISCHE PATENTSCHRIFT

(11) **EP 2 549 892 B1**
(45) Veröffentlichungstag und Bekanntmachung des Hinweises auf die Patenterteilung: **04.06.2014**
(21) Anmeldenummer: 10710164.4
(22) Anmeldetag: 22.03.2010
(51) Int. Cl.: A23N 1/02

(54) **MESSERBETT FÜR EINE VORRICHTUNG ZUM ZERKLEINERN VON ORGANISCHEN SUBSTANZEN**
BLADE BOX FOR DISINTEGRATING DEVICE FOR ORGANIC MATTER
PORTE-COUTEAUX POUR DISPOSITIF DE DÉSINTÉGRATION DE MATIÈRE ORGANIQUE

(43) Veröffentlichungstag der Anmeldung: 30.01.2013
(73) Patentinhaber: Bucher Unipektin AG, 8166 Niederweningen (CH)
(72) Erfinder: FISCHER, Matthias, 5312 Döttingen (CH)
(74) Vertreter: Münch, Martin Walter
(86) Internationale Anmeldenummer: PCT/CH2010/000081
(87) Internationale Veröffentlichungsnummer: WO 2011/116482

(56) Entgegenhaltungen:
- EP-A1- 0 109 691
- WO-A2-2004/106015
- US-A- 3 255 646
- US-A- 4 584 919
- US-A- 6 116 130

## Beschreibung

### TECHNISCHES GEBIET

Die vorliegende Erfindung betrifft ein Messerbett für eine Vorrichtung zum Zerkleinern von organischen Substanzen, insbesondere zum Zerreissen von Früchten, ein Set zur Bildung eines solchen Messerbetts sowie eine Vorrichtung zum Zerkleinern von organischen Substanzen, insbesondere zum Zerreissen von Früchten, mit einem solchen Messerbett gemäss den Oberbegriffen der unabhängigen Patentansprüche.

### STAND DER TECHNIK

Vorrichtungen zum Zerkleinern von organischen Substanzen kommen insbesondere in der Lebensmittelindustrie zum Einsatz, so z.B. bei der Saftherstellung aus Obst oder Gemüse oder bei der Herstellung von Zucker aus Zuckerrüben.

Aus WO 00/47066 A1 ist eine Vorrichtung zum Zerreissen von Früchten bekannt, welche ein feststehendes trommelförmiges Messerbett aufweist, an dessen Innenseite über zwei Drittel des Umfangs Reissmesser angeordnet sind. Im Zentrum des von dem Messerbett umschlossenen Raumes ist ein Rotor mit Mitnehmerelementen angeordnet, mit welchem im Betrieb die diesem Raum durch eine Transportschnecke axial zugeführten Früchte entlang der Reissmesser geführt werden, zum Abreissen von Stücken von diesen. Jedem der Reissmesser ist eine sich entlang diesem Messer erstreckende Abführungsöffnung zum Abführen der abgerissenen Stücke aus dem von dem Messerbett umschlossenen Raum zugeordnet.

Aus US 4,584,919 ist eine Trommel-Schneidmaschine zum Schneiden von Zuckerrüben in Schnitzel bekannt. Sie besitzt eine Anzahl von Halteelementen, welche über den Umfang der Schneidtrommel in gleichen Abständen angeordnet sind und sich parallel zur Trommelachse erstrecken. An den Halteelementen sind Schneidmesser befestigt, deren Schneidkanten sich im Wesentlichen in Umfangsrichtung erstrecken. Zwischen den Schneidmessern sind Abführungsöffnungen gebildet, zum Abführen der Schnitzel aus der Trommel.

Da sich bei derartigen Vorrichtungen im Betrieb die Messer abnutzen und stumpf werden bzw. durch Fremdkörper im Fruchtgut beschädigt werden, müssen diese relativ häufig gewechselt oder ersetzt werden, was bei den heute bekannten Vorrichtungen mit einem nicht unerheblichen Arbeitsaufwand verbunden ist, da die stumpfen bzw. beschädigten Messer einzeln demontiert und die neuen Messer einzeln ausgerichtet und befestigt werden müssen.

Auch besteht bei den heute bekannten Konstruktionen die Gefahr, dass sich im Betrieb bei einzelnen Messern Befestigungsteile lösen, welche dann in das zu zerkleinernde Fruchtgut gelangen und die Messer beschädigen.

### DARSTELLUNG DER ERFINDUNG

Es stellt sich daher die Aufgabe, eine Vorrichtung zum Zerkleinern von organischen Substanzen sowie ein Messerbett für eine solche Vorrichtung zur Verfügung zu stellen, welche die zuvor erwähnten Nachteile des Standes der Technik nicht aufweisen oder diese zumindest teilweise vermeiden.

Diese Aufgabe wird durch die Gegenstände der unabhängigen Patentansprüche gelöst.

Demgemäss betrifft ein erster Aspekt der Erfindung ein Messerbett für eine Vorrichtung zum Zerkleinern von organischen Substanzen, bevorzugterweise zum Schnitzeln oder Zerreissen von Gemüse und Früchten. Das Messerbett weist eine Vielzahl auswechselbarer Messerelemente auf, welche in einer Tragstruktur des Messerbetts derartig angeordnet sind, dass sie auf einer Arbeitsseite des Messerbetts über die Tragstruktur überstehen, zum Abschneiden oder Abreissen von Stücken von im bestimmungsgemässen Betrieb entlang der Arbeitsseite des Messerbetts quer zu den Messerelementen bewegten organischen Substanzen. Dabei sind die Messerelemente derartig in der Tragstruktur angeordnet, dass ihre über die Struktur vorstehenden Bereiche bzw. Schneidkanten eine Kreiszylindermantelfläche um eine zentrale Achse herum oder einen Teil einer solchen Kreiszylindermantelfläche um eine zentrale Achse herum beschreiben, wobei sich die Messerelemente quer, bevorzugterweise senkrecht zur Umfangsrichtung dieser Kreiszylindermantelfläche erstrecken. Zwischen den Messerelementen weist das Messerbett Durchtrittsöffnungen auf, zum Abführen der mit den Messerelementen auf der Arbeitsseite abgeschnittenen oder abgerissenen Stücke zu einer Abführungsseite des Messerbetts. Die Messerelemente sind jeweils einzeln durch Formschluss mit der Tragstruktur in einer Richtung von der zentralen Achse der durch die Schneidkanten der Messerelemente beschriebenen Kreiszylindermantelfläche radial zum Messerelement zeigend und in einer oder in beiden Umfangsrichtungen dieser Kreiszylindermantelfläche in der Tragstruktur positioniert, so dass die Position der Messerelemente zumindest in den Hauptbelastungsrichtungen durch die Tragstruktur vorgegeben ist und im Betrieb in diesen Richtungen an den Messern angreifende Kräfte direkt in die Tragstruktur eingeleitet werden können. Dabei sind die Messerelemente gruppenweise oder sind sämtliche Messerelemente mit gemeinsamen Sicherungsmitteln in ihrer Position durch den Formschluss mit der Tragstruktur vorgegebenen Position in bzw. an der Tragstruktur gesichert. Die Sicherungsmittel sind bevorzugterweise zerstörungsfrei entfernbar und wieder montierbar. Nach einem Entfernen der Sicherungsmittel sind die zuvor durch diese Sicherungsmittel gesicherten Messerelemente einzeln aus der Tragstruktur entfernbar.

Durch die erfindungsgemässe Ausgestaltung des Messerbetts ergibt sich gegenüber dem Stand der Technik eine deutliche Erleichterung beim Auswechseln der Messerelemente. Auch wird die Gefahr, dass sich im Betrieb Befestigungsteile lösen, welche dann in das zu zerkleinernde Fruchtgut gelangen und die Messer beschädigen, deutlich herabgesetzt.

Mit anderen Worten gesagt betrifft der erste Aspekt der Erfindung ein Messerbett für eine Vorrichtung zum Zerkleinern von organischen Substanzen, mit einer Vielzahl Messerelemente, welche auf der Arbeitsseite des Messerbetts überstehen derart, dass sie eine Kreiszylindermantelfläche um eine zentrale Achse herum beschreiben, wobei sie sich senkrecht zur Umfangsrichtung dieser Kreiszylindermantelfläche erstrecken. Zwischen den Messerelementen sind Durchtrittsöffnungen angeordnet, zum Abführen der mit den Messerelementen abgerissenen Stücke von der Arbeitsseite des Messerbetts zu dessen Abführungsseite. Die einzelnen Messerelemente sind jeweils durch Formschluss mit der Tragstruktur des Messerbetts in einer Richtung von der zentralen Achse radial zum jeweiligen Messerelement zeigend und in einer oder beiden Umfangsrichtungen der durch die überstehenden Messerelemente beschriebenen Kreiszylindermantelfläche in der Tragstruktur positioniert und werden mit gemeinsamen Sicherungsmitteln in ihrer Position in der Tragstruktur gesichert. Nach einem Entfernen dieser Sicherungsmittel sind sie einzeln aus der Tragstruktur entfernbar.

In einer bevorzugten Ausführungsform weist das Messerbett, angeordnet zwischen den Messerelementen, Zwischenelemente auf, welche zwischen den Messerelementen Flächen bilden, auf denen im bestimmungsgemässen Betrieb die entlang der Arbeitsseite des Messerbetts quer zu den Messerelementen bewegten organischen Substanzen gleiten können. Diese Zwischenelemente bilden zumindest einen Teil der Begrenzungen der Durchtrittsöffnungen. Sie sind von den Sicherungsmitteln der Messerelemente in ihrer Position in bzw. an der Tragstruktur gesichert und können nach einem Entfernen dieser Sicherungsmittel einzeln aus bzw. von der Tragstruktur entfernt werden. Durch diese Ausgestaltung wird es möglich, durch Verwendung unterschiedlicher Zwischenelemente die Form und Lage der Durchtrittsöffnungen zu verändern, z.B. um dass Messerbett auf ein bestimmtes Produkt optimal anzupassen.

Dabei ist es bevorzugt, dass die einzelnen Zwischenelemente jeweils durch Formschluss mit der Tragstruktur in einer Richtung von der zentralen Achse der durch die Schneidkanten der Messerelemente beschriebenen Kreiszylindermantelfläche radial zum Zwischenelement zeigend in der Tragstruktur positioniert, so dass die Position der Zwischenelemente zumindest in der Hauptbelastungsrichtung dieser Elemente durch die Tragstruktur vorgegeben ist und im Betrieb in dieser Richtung an den Zwischenelementen angreifende Kräfte direkt in die Tragstruktur eingeleitet werden können.

Noch bevorzugter ist es, wenn die einzelnen Zwischenelemente zusätzlich jeweils durch Formschluss mit der Tragstruktur oder durch Formschluss mit den Messerelementen in einer oder in beiden Umfangsrichtungen der durch die überstehenden Messerelemente beschriebenen Kreiszylindermantelfläche in der Tragstruktur positioniert sind, da hierdurch deren Montage deutlich erleichtert wird.

In einer weiteren bevorzugten Ausführungsform des Messerbetts sind die Messerelemente und/oder die Zwischenelemente zusätzlich durch Formschluss mit der Tragstruktur in einer oder in beiden Richtungen quer zur Umfangsrichtung der durch die überstehenden Messerelemente beschriebenen Kreiszylindermantelfläche in der Tragstruktur positioniert, wodurch eine weitere Arbeitserleichterung bei der Montage resultiert.

In noch einer weiteren bevorzugten Ausführungsform des Messerbetts sind die Begrenzungen der Durchtrittsöffnungen jeweils zum Teil von den Messerelementen gebildet, so dass die Durchtrittsöffnungen direkt an die Messerelemente angrenzen. Hierdurch wird eine problemlose Abführung der von den Messerelementen abgeschnittenen oder abgerissenen Stücke des zu zerkleinernden Materials zur Abführungsseite des Messerbetts begünstigt.

Weiter ist es bevorzugt, dass die Durchtrittsöffnungen jeweils spiegelbildlich auf beiden Seiten jedes Messerelements angeordnet sind. Insbesondere bei Messerbetten zum Zerreissen von.Früchten oder Gemüse, bei denen die Schneiden der Messerelemente typischerweise als gezahnte Stirnflächen ausgebildet sind, die zur zentralen Achse der durch die Schneidkanten der Messerelemente beschriebenen Kreiszylindermantelfläche hin orientiert sind, ergibt sich der Vorteil, dass sich in beiden Umfangsrichtungen der durch die überstehenden Messerelemente beschriebenen Kreiszylindermantelfläche eine identische Abfolge und Geometrie von Messerelementschneiden und Durchtrittsöffnungen ergibt, so dass das Messerbett in beiden Umfangsrichtung gleichwirkend ist bzw. das zu zerkleinernde Material in beiden Umfangrichtungen über das Messerbett bewegt werden kann, zum Abschneiden oder Abreissen von Stücken davon.

In noch einer weiteren bevorzugten Ausführungsform des Messerbetts sind die Messerelemente und/oder die Zwischenelemente jeweils sowohl im Bereich ihrer beiden Enden als auch in einem mittleren Bereich zwischen ihren beiden Enden durch Formschluss mit der Tragstruktur in der Richtung von der zentralen Achse radial zum jeweiligen Messer- und/oder Zwischenelement zeigend und in einer oder in beiden Umfangsrichtungen der durch die überstehenden Messerelemente beschriebenen Kreiszylindermantelfläche in der Tragstruktur positioniert. Hierdurch kann eine Durchbiegung dieser Elemente im Betreib in deren Hauptbelastungsrichtüngen verhindert werden.

Bevorzugterweise ist bei dem erfindungsgemässen Messerbett zumindest der Formschluss der Messerelemente und/oder der Zwischenelemente mit der Tragstruktur in der Richtung von der zentralen Achse der durch die überstehenden Messerelemente beschriebenen Kreiszylindermantelfläche radial zum jeweiligen Messer- und/oder Zwischenelement zeigend und in einer oder in beiden Umfangsrichtungen dieser Kreiszylindermantelfläche dadurch realisiert, dass die jeweiligen Messer- und/oder Zwischenelemente jeweils in Vertiefungen in der Tragstruktur eingesetzt sind. Auf diese Weise können die Messer- und/oder Zwischenelemente als einfache, leistenförmige Elemente ausgebildet werden, was bevorzugt ist, da es eine kostengünstige Herstellung derselben begünstigt.

In noch einer weiteren bevorzugten Ausführungsform des Messerbetts sind die Sicherungsmittel derartig ausgebildet, dass sie einen Formschluss der Messerelemente und/oder der Zwischenelemente mit der Tragstruktur in einer Richtung vom jeweiligen Element zur zentralen Achse der durch die überstehenden Messerelemente beschriebenen Kreiszylindermantelfläche zeigend und in einer oder in beiden Richtungen quer zur Umfangrichtung dieser Kreiszylindermantelfläche in der Tragstruktur herstellen.

Entsprechend sind die Messerelemente und, falls vorhanden, bevorzugterweise auch die Zwischenelemente in sämtlichen Richtungen formschlüssig mit der Tragstruktur verbunden, wodurch ein Verschieben derselben gegenüber der Tragstruktur während dem Betrieb sicher verhindert werden kann.

Die Messerelemente des erfindungsgemässen Messerbetts sind bevorzugterweise aus einem Material gleichmässiger Dicke gebildet und weisen bevorzugterweise jeweils eine identische Form auf, so dass sie kostengünstig durch Stanzen oder Laserschneiden aus einem Blechmaterial hergestellt werden können. Dabei weisen Messerelemente, die zum Zerreissen von Früchten oder Gemüse vorgesehen sind, bevorzugterweise gezahnte Schneiden auf.

Besonders vorteilhaft ist es zudem, wenn die Messerelemente jeweils eine oder zwei sich entlang ihrer Längserstreckung erstreckende Symmetrieachsen aufweisen, so dass sie zwei oder vier identische Schneiden oder Schneidkanten aufweisen, welche durch Wenden und oder Drehen des Messerelements in die Arbeitsposition gebracht werden können. Hierdurch lassen sich die Messerelemente ohne Nachbearbeitung zweifach oder vierfach verwenden.

Das zuvor Gesagte gilt sinngemäss auch für die Zwischenelemente, sofern das Messerbett derartige Elemente aufweist.

In einer weiteren bevorzugten Ausführungsform des Messerbetts ist dessen Tragstruktur eine gebaute Struktur aus mehreren Teilen, welche durch Verschweissen und/oder Verschrauben miteinander verbunden sind. Auf diese Weise lassen sich mit einigen standardisierten Bauteile verschiedene Messerbetten bilden, was zu Vorteilen in der Fertigung und bei der Lagerhaltung führt.

Auch ist es bevorzugt, dass die Tragstruktur mindestens drei bevorzugterweise identische Tragrippen aufweist, bevorzugterweise aus einem Material gleichmässiger Dicke, welche über Abstandselemente zu einer Rippenstruktur miteinander verbunden sind. Hierdurch wird es möglich, die wesentlichen Elemente der Tragstruktur kostengünstig durch Stanzen oder Laserschneiden aus einem Blechmaterial herzustellen, mit entsprechenden Kostenvorteilen für das Messerbett.

Weist das Messerbett eine Symmetrieachse auf, die senkrecht zur zentralen Achse verläuft, was bevorzugt ist, so kann es in einer das Messerbett aufnehmenden Vorrichtung zur Zerkleinerung von organischen Substanzen in zwei verschiedenen Positionen eingesetzt werden, ohne dass sich hierdurch eine Veränderung der Geometrie ergibt. Hierdurch ergibt sich der Vorteil, dass das Messerbett für den Fall des Verschleisses der Messerelemente in der ersten Position anschliessend in der zweiten Position in die Vorrichtung eingebaut werden kann, so dass das Messerbett ohne Reparatur oder Austausch von Messerelementen zweifach eingesetzt werden kann.

In einer bevorzugten Ausführungsform ist das Messerbett derartig ausgebildet, dass die über seine Tragstruktur überstehenden Messerelemente einen Teil einer Kreiszylindermantelfläche mit einer Umfangserstreckung von weniger als 240°, bevorzugterweise von weniger als 180° beschreiben. Derartige Messerbetten eignen sich besonders gut für Vorrichtungen bei denen das Messerbett einen Teil der Umfangsbegrenzung eines feststehenden Trommelraumes bilden, in welchem das zu zerkleinernde Material entlang der Umfangsbegrenzungen bewegt wird.

Ein zweiter Aspekt der Erfindung betrifft ein Set zur Bildung eines Messerbetts gemäss dem ersten Aspekt der Erfindung. Entsprechend umfasst das Set eine Tragstruktur, Messerelemente zur Anordnung in der Tragstruktur sowie Sicherungsmittel zum Sichern der in der Tragstruktur aufgenommenen Messerelemente in der Tragstruktur. Entsprechend ist die Tragstruktur derartig ausgebildet, dass sie die Messerelemente aufnehmen kann derart, dass diese auf einer die Arbeitsseite des zu bildenden Messerbetts bildenden Seite über die Tragstruktur überstehen, wobei die Messerelemente mit ihren über die Struktur vorstehenden Schneidkanten eine Kreiszylindermantelfläche um eine zentrale Achse herum beschreiben und sich quer, bevorzugterweise senkrecht zur Umfangsrichtung dieser Kreiszylindermantelfläche erstrecken. Dabei sind die Tragstruktur und die Messerelemente des Sets derartig ausgebildet, dass bei bestimmungsgemäss in der Tragstruktur aufgenommenen Messerelementen zwischen jedem Messerelement und der Tragstruktur ein Formschluss in einer Richtung von der zentralen Achse der durch die Schneidkanten der Messerelemente beschriebenen Kreiszylindermantelfläche radial zum Messerelement zeigend und in einer oder in beiden Umfangsrichtungen dieser Kreiszylindermantelfläche vorliegt, so dass die Position der Messerelemente zumindest in den Hauptbelastungsrichtungen durch die Tragstruktur vorgegeben ist und im Betrieb in diesen Richtungen an den Messern angreifende Kräfte direkt in die Tragstruktur eingeleitet werden können. Dabei werden zwischen den Messerelementen Durchtrittsöffnungen durch das zu bildende Messerbett gebildet. Weiter sind die Tragstruktur, die Messerelemente und die Sicherungsmittel des Sets derartig ausgebildet, dass bei bestimmungsgemäss in der Tragstruktur aufgenommenen Messerelementen die Messerelemente gruppenweise oder gesamthaft mit gemeinsamen Sicherungsmitteln in ihrer durch den Formschluss mit der Tragstruktur vorgegebenen Position in bzw. an der Tragstruktur gesichert werden können. Mit einem solchen Set lässt sich auf einfache Weise ein Messerbett gemäss dem ersten Aspekt der Erfindung bilden.

In einer bevorzugten Ausführungsform des Sets umfasst dieses zusätzlich Zwischenelemente zur Anordnung in der Tragstruktur jeweils zwischen den Messerelementen. Entsprechend ist die Tragstruktur derartig ausgebildet, dass sie die Zwischenelemente aufnehmen kann derart, dass diese zwischen den Messerelementen Flächen bilden, auf denen im bestimmungsgemässen Betrieb die entlang der Arbeitsseite des Messerbetts quer zu den Messerelementen bewegten organischen Substanzen gleiten können. Dabei sind die Tragstruktur und die Zwischenelemente des Sets dahingehend ausgebildet, dass die Zwischeneleinente zumindest einen Teil der Begrenzungen der Durchtrittsöffnungen bilden. Weiter sind die Sicherungsmittel des Sets derartig ausgebildet, dass bei bestimmungsgemäss in der Tragstruktur aufgenommenen Messer- und Zwischenelementen die Zwischenelemente mit den Sicherungsmitteln in ihrer Position in bzw. an der Tragstruktur gesichert werden können.

In einer weiteren bevorzugten Ausführungsform umfasst das Set mehrere verschiedene Sätze von jeweils identischen Messerelementen und/oder Zwischenelementen zur wahlweisen Anordnung in der Tragstruktur. Auf diese Weise lassen sich mit dem erfindungsgemässen Set wahlweise Messerbetten mit unterschiedlichen Messer- und/oder Durchtrittsöffnungsgeometrien bilden.

Ein dritter Aspekt der Erfindung betrifft eine Vorrichtung zum Zerkleinern von organischen Substanzen, bevorzugterweise zum Zerreissen von Früchten, mit einem bevorzugterweise feststehenden Messerbett gemäss dem ersten Aspekt der Erfindung. Die Bildung einer derartigen Vorrichtung stellt eine bevorzugte Verwendung des erfindungsgemässen Messerbetts dar.

In einer bevorzugten Ausführungsform der Vorrichtung bildet das Messerbett den unteren Teil der umfangsmässigen Begrenzung eines bevorzugterweise feststehenden Trommelraumes, dem über eine axiale Öffnung das zu zerkleinernde Material zugeführt werden kann und in welchem ein Rotor mit Mitnehmerelementen, wie z.B. Mitnehmerarmen, angeordnet ist, mit welchen beim bestimmungsgemässen Betrieb das in den Trommelraum eingebrachte Material entlang der Arbeitsseite des Messerbetts quer zur Längserstreckung der Messerelemente bewegt werden kann, also mit anderen Worten gesagt in Umfangsrichtung der von den überstehenden Messerelementen beschriebenen Kreiszylindermantelfläche bewegt werden kann, zum Abschneiden oder Abreissen von Stücken von dem eingebrachten Material. Derartige Bauformen gattungsgemässer Vorrichtungen haben sich in der Praxis besonders bewährt.

Ist das Messerbett der erfindungsgemässen Vorrichtung werkzeuglos ein- und ausbaubar, was bevorzugt ist, kann dieses auf einfache Weise für Servicearbeiten und zur Reinigung aus der Vorrichtung entfernt werden.

Dabei ist es weiter bevorzugt, dass die Vorrichtung ein Messerbett aufweist, welches eine senkrecht zur zentralen Achse der von den überstehenden Messerelementen beschriebenen Kreiszylindermantelfläche verlaufende Symmetrieachse hat, und derartig ausgebildet ist, dass das Messerbett wahlweise in einer ersten Orientierung und in einer zweiten Orientierung, welche gegenüber der ersten Orientierung 180° um eine Achse quer zur zentralen Achse gedreht ist, in die Vorrichtung einbaubar ist. Hierdurch ergibt sich der Vorteil, dass das Messerbett für den Fall des Verschleisses der Messerelemente in der ersten Position anschliessend in der zweiten Position in die Vorrichtung eingebaut werden kann, so dass das Messerbett ohne Reparatur oder Austausch von Messerelementen zweifach eingesetzt werden kann.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Draufsicht teilweise in der Explosionsdarstellung auf ein erfindungsgemässes Reissbett für eine Trommelmühle;
Fig. 2 eine perspektivische Draufsicht auf das Reissbett aus Fig. 1 mit einem zugeordneten Rotor mit Mitnehmerelementen und Förderschnecke;
Fig. 3 eine perspektivische Draufsicht auf eine erfindungsgemässe Trommelmühle mit dem Reissbett und dem Rotor aus Fig. 2;
Fig. 4 einen vertikalen Längsschnitt durch die Trommelmühle aus Fig. 3;
Fig. 5 eine perspektivische Draufsicht auf das Mühlenteil bei geöffnetem Trommelraum; und
Fig. 6 eine Darstellung wie Fig. 5 mit aus dem Trommelraum entnommenem Reissbett.

### WEGE ZUR AUSFÜHRUNG DER ERFINDUNG

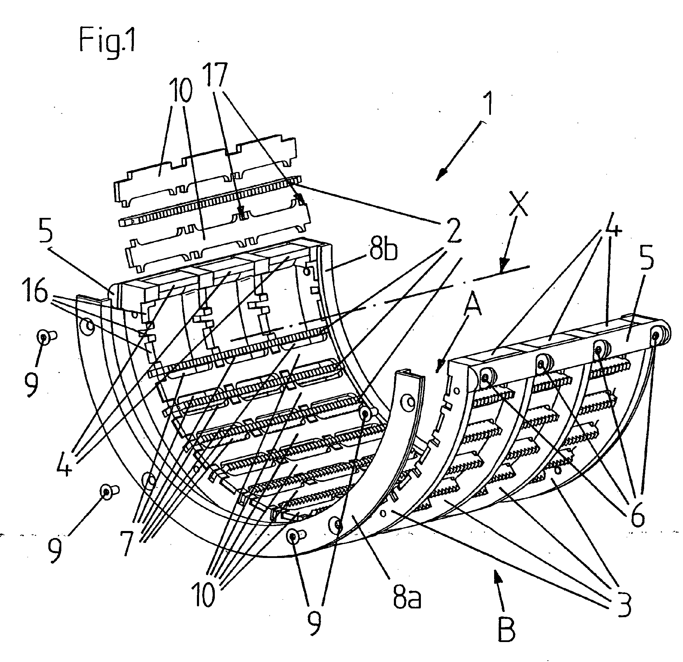

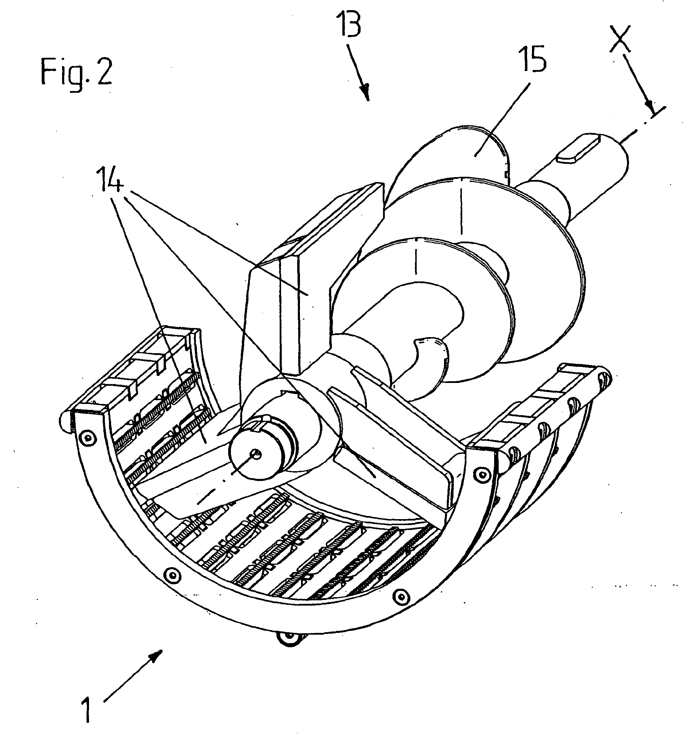

Die Figuren 1 und 2 zeigen perspektivische Darstellungen eines als feststehendes halbtrommelförmiges Reissbett 1 für eine Trommel-Reissmühle für Früchte ausgebildeten erfindungsgemässen Messerbetts 1, einmal in einer Draufsicht teilweise in Explosionsdarstellung und einmal zusammen mit einem zugeordneten Rotor 13 mit Mitnehmerelementen 14 und Förderschnecke 15, mittels welchem zu zerkleinerndes Material entlang dem Reissbett 1 bewegt werden kann.

Wie zu erkennen ist, weist das Reissbett 1 eine Tragstruktur 3, 4, 5, 6 aus vier im Wesentlichen identischen halbkreisringförmigen Tragrippen 3 auf, welche über Abstandshalter 4, Verbindungsbrücken 5 und Verbindungsschrauben 6 zu einer halbtrommelförmigen Rippenstruktur miteinander verbunden sind. Die Tragrippen 3 weisen auf ihren Wölbungsinnenseiten jeweils Vertiefungen 16 auf, in welchen in Umfangsrichtung gesehen abwechselnd Reissmesser 2 und Zwischenelemente 10 aufgenommen sind, derart, dass die Schneiden der Reissmesser 2, welche von gezahnten Stirnflächen derselben gebildet werden, auf der Wölbungsinnenseite über die Tragrippen 3 überstehen, während die Zwischenelemente 10 im Wesentlichen bündig mit den Tragrippen 3 abschliessen. Einige der Vertiefungen 16 sind im oberen linken Bereich der Fig. 1 erkennbar, in welchem Bereich das äusserste Reissmesser 2 und die zwei äussersten Zwischenelemente 10 aus der Tragstruktur des Reissbetts 1 entnommen dargestellt sind.

Wie weiter zu erkennen ist, sind die überstehenden Schneiden der Reissmesser 2 derartig zueinander angeordnet, dass sie einen Teil einer Kreiszylindermantelfläche um eine zentrale Achse X herum mit einer Umfangserstreckung von weniger als 180° beschreiben, wobei sie sich mit ihrer Längserstreckung senkrecht zur Umfangsrichtung dieser Kreiszylindermantelfläche erstrecken.

Durch die Vertiefungen 16 auf der Wölbungsinnenseite der Tragrippen 3 sind die einzelnen Reissmesser 2 und Zwischenelemente 10 jeweils durch Formschluss mit den Tragrippen 3 in einer Richtung von der zentralen Achse X radial zum jeweiligen Reissmesser 2 bzw. Zwischenelement 10 zeigend und in beiden Umfangsrichtungen der durch die überstehenden Schneiden der Messerelemente 2 beschriebenen Kreiszylindermantelfläche in der Tragstruktur 3, 4, 5, 6 positioniert.

Die Zwischenelemente 10 weisen zudem Aussparungen 17 auf, mit denen sie durch Formschluss mit den Tragrippen 3 in beiden Richtungen quer zur Umfangrichtung der durch die überstehenden Messerelemente 2 beschriebenen Kreiszylindermantelfläche in der Tragstruktur 3, 4, 5, 6 positioniert sind.

Die Reissmesser 2 sind jeweils an ihren Enden abgesetzt und dadurch durch Formschluss mit den beiden äusseren Tragrippen 3 in beiden Richtungen quer zur Umfangsrichtung der durch die überstehenden Messerelemente 2 beschriebenen Kreiszylindermantelfläche in der Tragstruktur 3, 4, 5, 6 positioniert.

Wie weiter ersichtlich ist, bilden die Reissmesser 2 und die Zwischenelemente 10 gemeinsam jeweils spiegelbildlich zu beiden Seiten der Reissmesser 2 Durchtrittsöffnungen 7 zum Abführen der mit den Reissmessern 2 im Betrieb abgerissenen Stücke des zu zerkleinernden Materials von der Arbeitsseite A des Messerbetts 1 zu dessen Abführungsseite B.

Wie aus einer Zusammenschau der Fig. 1, in welcher einige Bauteile 2, 8a, 9, 10 explosionsartig aus der Tragstruktur des Reissbetts 1 entnommen oder von dieser entfernt dargestellt sind, mit Fig. 2, welche das Reissbett 1 in vollständig montiertem Zustand zeigt, hervorgeht, sind sämtliche Reissmesser 2 und Zwischenelemente 10 von zwei Sicherungshalbringen 8a, 8b, in ihrer Position in der Tragstruktur 3, 4, 5, 6 gesichert und können nach dem Entfernen der Sicherungshalbringe 8a, 8b einzeln aus der Tragstruktur 3, 4, 5, 6 entnommen werden.

Die Sicherungshalbringe 8a, 8b sind mit Schrauben 9 stirnseitig mit den äusseren Tragrippen 3 der Tragstruktur verschraubt und stellen so einen Formschluss der Reissmesser 2 und der Zwischenelemente 10 mit der Tragstruktur 3, 4, 5, 6 in einer Richtung vom jeweiligen Element 2, 10 zur zentralen Achse X zeigend und in beiden Richtungen quer zur Umfangrichtung der durch die überstehenden Messerelemente 2 beschriebenen Kreiszylindermantelfläche her.

Die Reissmesser 2 und die Zwischenelemente 10 sind im vorliegendem Fall durch Stanzen oder Laserschneiden aus rostfreiem Stahlblech hergestellt und sind mit Ausnahme der äussersten Zwischenelemente 10 symmetrisch entlang ihrer Längsachse. Dabei weisen die Reismesser 2 insgesamt vier identische Schneidkanten auf, so dass sie durch wahlweises Wenden, Drehen um 180° oder Wenden und Drehen um 180° vierfach verwendet werden können.

Durch den Aufbau der Tragstruktur 3, 4, 5, 6 und die zuvor genannte Ausgestaltung der Reissmesser 2 und Zwischenelemente 10 weist das Reissbett 1 eine Symmetrieachse auf, die senkrecht zur zentralen Achse X der durch die überstehenden Reissmesser 2 beschriebenen Kreiszylindermantelfläche verläuft. Hierdurch kann das Reissbett 1 in identischer Weise in zwei verschiedenen, 180° zueinander gedrehten Positionen verwendet werden, wie dies im Folgenden noch genauer beschrieben werden wird.

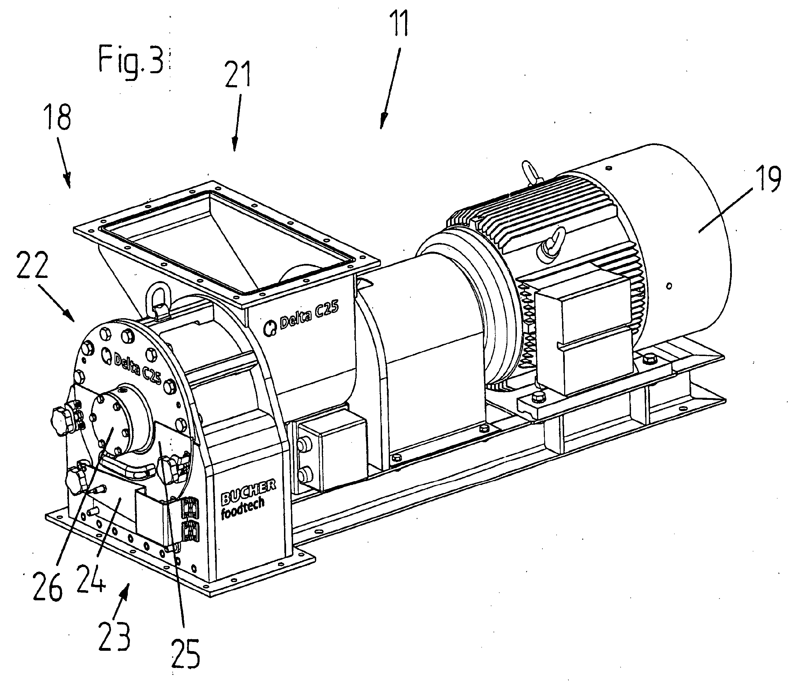

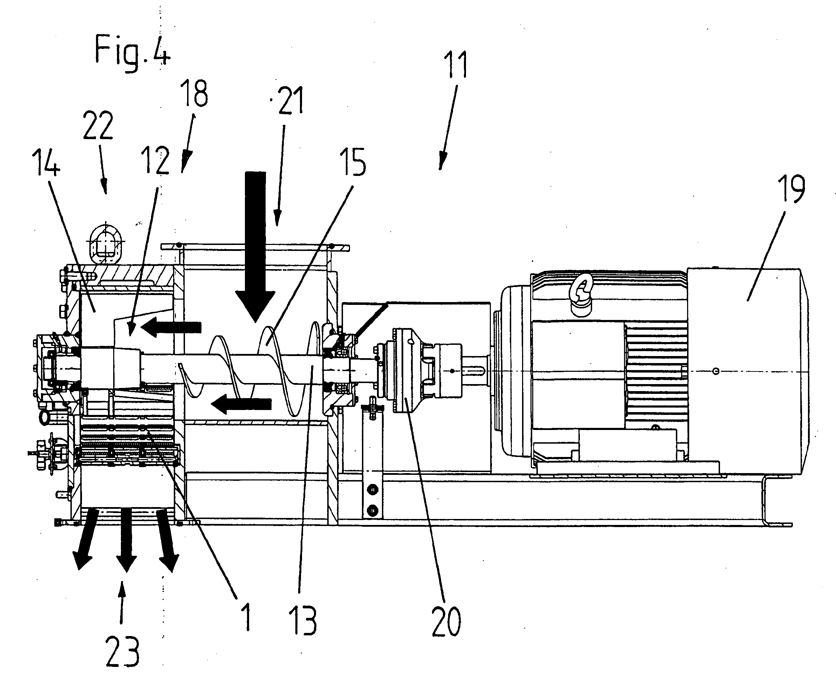

Fig. 3 zeigt eine perspektivische Draufsicht auf eine erfindungsgemässe Trommelmühle 11 zum Zerreissen von Früchten mit dem Reissbett 1 und dem Rotor 13 aus Fig. 2. Fig. 4 zeigt einen vertikalen Längsschnitt durch diese Trommelmühle 11. Wie aus den Figuren 3 und 4 zu erkennen ist, besteht die Trommelmühle aus einem Mühlenteil 18 und einem Elektromotor 19, welcher über eine Kupplung 20 mit dem Rotor 13 gekoppelt ist. Das Mühlenteil 18 besteht im Wesentlichen aus einem Einlauftrichter 21, in welchem die Förderschnecke 15 des Rotors 13 angeordnet ist, und aus einem Trommelteil 22, welcher einen Trommelraum 12 bildet, in dem Mitnehmerelemente 14 des Rotors 13 angeordnet sind.

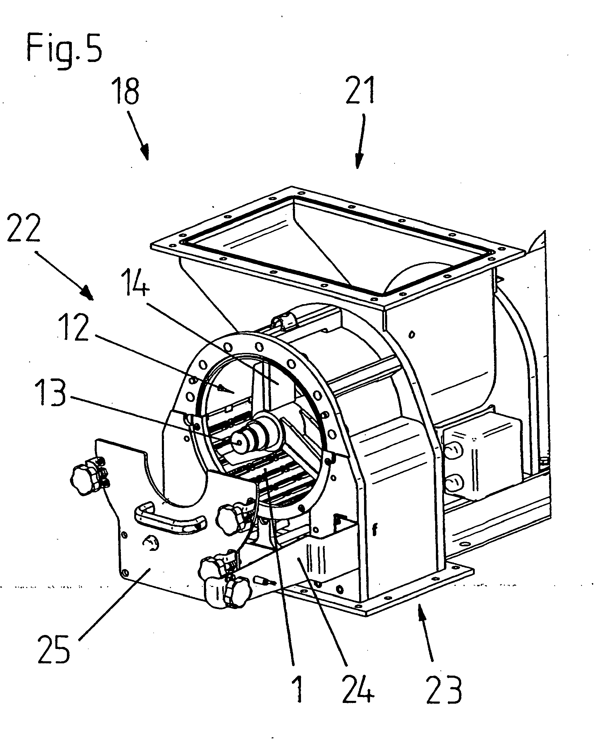

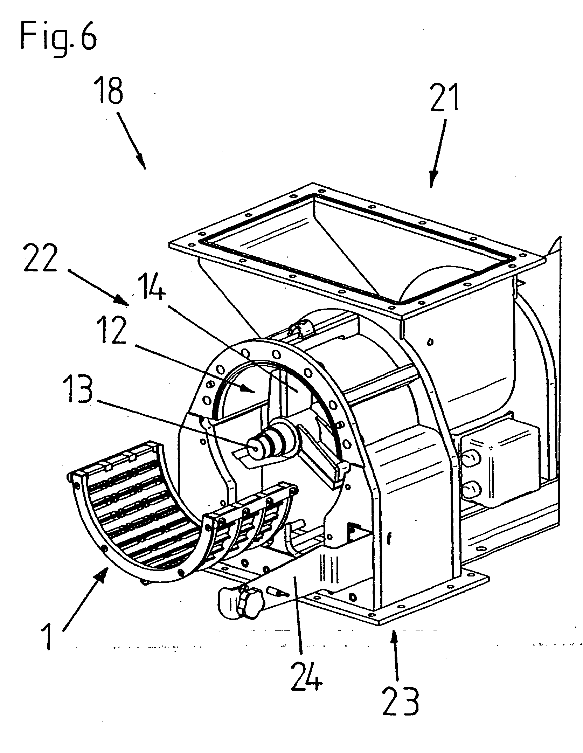

Wie insbesondere in Zusammenschau mit den Figuren 5 und 6 zu erkennen ist, welche perspektivische Draufsichten auf das Mühlenteil 18 bei geöffnetem Trommelraum 12, einmal mit installiertem Reissbett 1 (Fig. 5) und einmal mit aus dem Trommelraum 12 entnommenen Reissbett 1 (Fig. 6) zeigen, bildet das Reissbett 1 den unteren Teil der umfangsmässigen Begrenzung des Trommelraumes 12.

Wie insbesondere aus Fig. 4 ersichtlich ist, in denen die Materialflussrichtung im Betrieb durch fette schwarze Pfeile angedeutet ist, kann bei mit dem Elektromotor 19 rotiertem Rotor 13 das in den Einlauftrichter 21 eingebrachte zu zerkleinernde Fruchtmaterial dem Trommelraum 12 mittels der Förderschnecke 15 über eine axiale Öffnung in der zum Einlauftrichter 21 hinweisenden axialen Begrenzungswand des Trommelraumes 12 zugeführt werden, wo es dann von den Mitnehmerarmen 14 des Rotors 13 erfasst und entlang den umfangsmässigen Begrenzungen des Trommelraumes 12 in Umfangsrichtung bewegt wird. Dabei wird das Material durch die Fliehkraft radial nach aussen gedrückt und im unteren Bereich des Trommelraumes 12 über die Arbeitsseite A des Reissbettes 1 geführt, so dass Stücke aus dem Fruchtmaterial herausgerissen werden, welche dann über die Durchtrittsöffnungen 7 der Abführungsseite B des Reissbetts 1 und von dort der Austrittsöffnung 23 des Mühlenteils 18 zugeführt werden.

Wie aus den Figuren 5 und 6 ersichtlich ist, ist das Reissbett 1 werkzeuglos ein- und ausbaubar, indem ein Riegel 24, welcher eine Abdeckplatte 25 sichert, geöffnet wird und anschliessend die Abdeckplatte 25 entfernt wird, wodurch der untere Bereich des Trommelraumes 12 zugänglich wird. Hierzu ist es nicht zwingend erforderlich, wie gezeigt die Lagereinheit 26 (siehe Fig. 3) für den Rotor 13 zu entfernen.

Aufgrund der zuvor erwähnten Tatsache, dass das Reissbett 1 eine Symmetrieachse aufweist, die senkrecht zur zentralen Achse X der durch die überstehenden Messerelemente 2 beschriebenen Kreiszylindermantelfläche verläuft, kann das Reissbett 1 ausgehend von der in Fig. 6 gezeigten Entnahmesituation in der es eine anspruchsgemässe erste Orientierung aufweist, 180° um die vertikale Achse gedreht werden, so dass es eine anspruchsgemässe zweite Orientierung aufweist, und sodann in dieser zweiten Orientierung wieder eingebaut werden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Messerbett (1) für eine Vorrichtung zum Zerkleinern von organischen Substanzen, insbesondere zum Zerreissen von Früchten,
mit einer Vielzahl auswechselbarer Messerelemente (2), welche in einer Tragstruktur (3, 4, 5, 6) angeordnet sind, derart, dass sie auf einer Arbeitsseite (A) des Messerbetts (1) über die Tragstruktur (3, 4, 5, 6) überstehen zum Abschneiden oder Abreissen von Stücken von bei bestimmungsgemässer Verwendung entlang der Arbeitsseite (A) quer zu den Messerelementen (2) bewegten organischen Substanzen, wobei die überstehenden Messerelemente (2) eine Kreiszylindermantelfläche um eine zentrale Achse (X) herum oder einen Teil einer solchen Kreiszylindermantelfläche beschreiben und wobei sich die Längserstreckungen der Messerelemente (2) quer, insbesondere senkrecht zur Umfangsrichtung dieser Kreiszylindermantelfläche erstrecken,
und mit Durchtrittsöffnungen (7) zwischen den Messerelementen (2), zum Abführen der mit den Messerelementen (2) abgeschnittenen oder abgerissenen Stücke von der Arbeitsseite (A) des Messerbetts (1) zu einer Abführungsseite (B) des Messerbetts (1),
wobei die einzelnen Messerelemente (2) jeweils durch Formschluss mit der Tragstruktur (3, 4, 5, 6) in einer Richtung von der zentralen Achse (X) radial zum jeweiligen Messerelement (2) zeigend und in einer oder in beiden Umfangsrichtungen der durch die überstehenden Messerelemente (2) beschriebenen Kreiszylindermantelfläche in der Tragstruktur (3, 4, 5, 6) positioniert sind,
**dadurch gekennzeichnet, dass** mehrere Messerelemente (2) oder alle Messerelemente (2) mit gemeinsamen, insbesondere zerstörungsfrei entfernbaren und wieder montierbaren Sicherungsmitteln (8a, 8b, 9) in ihrer Position in der Tragstruktur (3, 4, 5, 6) gesichert sind und nach einem Entfernen dieser Sicherungsmittel (8a, 8b, 9) einzeln aus der Tragstruktur (3, 4, 5, 6) entfernbar sind.

2. Messerbett (1) nach Anspruch 1, **dadurch gekennzeichnet, dass** zwischen den Messerelementen (2) Zwischenelemente (10) angeordnet sind, welche Flächen zwischen den Messerelementen (2) bilden, auf denen die bei bestimmungsgemässer Verwendung des Messerbetts (1) entlang der Arbeitsseite (A) quer zu den Messerelementen (2) bewegten organischen Substanzen gleiten können, und welche zumindest einen Teil der Begrenzungen der Durchtrittsöffnungen. (7) bilden,
wobei die Zwischenelemente (10) von den Sicherungsmitteln (8a, 8b, 9) der Messerelemente (2) in ihrer Position in der Tragstruktur (3, 4, 5, 6) gesichert sind und nach einem Entfernen dieser Sicherungsmittel (8a, 8b, 9) einzeln aus der Tragstruktur (3, 4, 5, 6) entfernbar sind.

3. Messerbett (1) nach einem der vorangehenden Ansprüche, **dadurch gekennzeichnet, dass** die einzelnen Zwischenelemente (10) jeweils durch Formschluss mit der Tragstruktur (3, 4, 5, 6) in einer Richtung von der zentralen Achse (X) radial zum jeweiligen Zwischenelement (2) zeigend und insbesondere zusätzlich in einer oder in beiden Umfangsrichtungen der durch die überstehenden Messerelemente (2) beschriebenen Kreiszylindermantelfläche in der Tragstruktur (3, 4, 5, 6) positioniert sind.

4. Messerbett (1) nach einem der vorangehenden Ansprüche, **dadurch gekennzeichnet, dass** die Messerelemente (2) und/oder die Zwischenelemente (10) zusätzlich durch Formschluss mit der Tragstruktur (3, 4, 5, 6) in einer oder in beiden Richtungen quer zur Umfangrichtung der durch die überstehenden Messerelemente (2) beschriebenen Kreiszylindermantelfläche in der Tragstruktur (3, 4, 5, 6) positioniert sind.

5. Messerbett (1) nach einem der vorangehenden Ansprüche, **dadurch gekennzeichnet, dass** die Begrenzungen der Durchtrittsöffnungen (7) jeweils zum Teil von den Messerelementen (2) gebildet sind.

6. Messerbett (1) nach einem der vorangehenden Ansprüche, **dadurch gekennzeichnet, dass** die Durchtrittsöffnungen (7) jeweils spiegelbildlich auf beiden Seiten jedes Messerelements (2) angeordnet sind.

7. Messerbett (1) nach einem der vorangehenden Ansprüche, **dadurch gekennzeichnet, dass** die Messerelemente (2) und/oder die Zwischenelemente (10) jeweils im Bereich ihrer beiden Enden sowie in einem mittleren Bereich zwischen ihren beiden Enden durch Formschluss mit der Tragstruktur (3, 4, 5, 6) in der Richtung von der zentralen Achse (X) radial zum jeweiligen Element (2, 10) zeigend und in einer oder in beiden Umfangsrichtungen der durch die überstehenden Messerelemente (2) beschriebenen Kreiszylindermantelfläche in der Tragstruktur (3, 4, 5, 6) positioniert sind.

8. Messerbett (1) nach einem der vorangehenden Ansprüche, **dadurch gekennzeichnet, dass** zumindest der Formschluss der Messerelemente (2) und/oder der Zwischenelemente (10) mit der Tragstruktur (3, 4, 5, 6) in der Richtung von der zentralen Achse (X) radial zum jeweiligen Element (2, 10) zeigend und in einer oder in beiden Umfangsrichtungen der durch die überstehenden Messerelemente (2) beschriebenen Kreiszylindermantelfläche dadurch realisiert ist, dass diese in Vertiefungen in der Tragstruktur (3, 4, 5, 6) eingesetzt sind.

9. Messerbett (1) nach einem der vorangehenden Ansprüche, **dadurch gekennzeichnet, dass** die Sicherungsmittel (8a, 8b, 9) derartig ausgebildet sind, dass sie einen Formschluss der Messerelemente (2) und/oder der Zwischenelemente (10) mit der Tragstruktur (3, 4, 5, 6) in einer Richtung vom jeweiligen Element (2, 10) zur zentralen Achse (X) zeigend und in einer oder in beiden Richtungen quer zur Umfangrichtung der durch die überstehenden Messerelemente (2) beschriebenen Kreiszylindermantelfläche in der Tragstruktur herstellen.

10. Messerbett (1) nach einem der vorangehenden Ansprüche, **dadurch gekennzeichnet, dass** die Tragstruktur (3, 4, 5, 6) eine gebaute Struktur aus mehreren Teilen ist, welche durch Verschweissen und/oder Verschrauben miteinander verbunden sind.

11. Messerbett (1) nach einem der vorangehenden Ansprüche, **dadurch gekennzeichnet, dass** die Tragstruktur (3, 4, 5, 6) mindestens drei insbesondere identische Tragrippen (3) aufweist, welche über Abstandselemente (4, 5, 6) zu einer Rippenstruktur miteinander verbunden sind.

12. Messerbett (1) nach einem der vorangehenden Ansprüche, **dadurch gekennzeichnet, dass** das Messerbett eine Symmetrieachse aufweist, die senkrecht zur zentralen Achse (X) verläuft.

13. Messerbett (1) nach einem der vorangehenden Ansprüche, **dadurch gekennzeichnet, dass** die überstehenden Messerelemente (2) ein Teil einer Kreiszylindermantelfläche um eine zentrale Achse (X) herum mit einer Umfangserstreckung von weniger als 240°, insbesondere von weniger als 180° beschreiben.

14. Set zur Bildung eines Messerbetts (1) nach einem der vorangehenden Ansprüche, umfassend eine Tragstruktur (3, 4, 5, 6), Messerelemente (2) zur Anordnung in der Tragstruktur (3, 4, 5, 6) sowie Sicherungsmittel (8a, 8b, 9) zum Sichern der Messerelemente (2) in der Tragstruktur (3, 4, 5, 6).

15. Set nach Anspruch 14, des Weiteren umfassend Zwischenelemente (10) zur Anordnung in der Tragstruktur (3, 4, 5, 6) und zum Sichern mit den Sicherungsmitteln (8a, 8b, 9) in der Tragstruktur (3, 4, 5, 6).

16. Set nach einem der Ansprüche 14 bis 15, umfassend mehrere verschiedene Sätze Messerelemente (2) und/oder Zwischenelemente (10) zur wahlweisen Anordnung in der Tragstruktur.

17. Vorrichtung zum Zerkleinern von organischen Substanzen, insbesondere zum Zerreissen von Früchten, umfassend ein insbesondere feststehendes Messerbett (1) nach einem der Ansprüche 1 bis 13.

18. Vorrichtung (11) nach Anspruch 17 mit einem Messerbett (1) nach Anspruch 13, **dadurch gekennzeichnet, dass** das Messerbett (1) einen unteren Teil einer umfangsmässigen Begrenzung eines Trommelraumes (12) bildet, dem über eine axiale Öffnung das zu zerkleinernde Material zugeführt werden kann und in welchem ein Rotor (13) mit Mitnehmerelementen (14) angeordnet ist, mit welchen beim bestimmungsgemässen Betrieb das in den Trommelraum (12) eingebrachte Material entlang der Arbeitsseite (A) des Messerbetts (1) quer zur Längserstreckung der Messerelemente (2) bewegt werden kann, zum Abschneiden oder Abreissen von Stücken von dem eingebrachten Material.

19. Vorrichtung (11) nach einem der Ansprüche 17 bis 18, **dadurch gekennzeichnet, dass** das Messerbett (1) werkzeuglos ein- und ausbaubar ist.

20. Vorrichtung (11) nach Anspruch 19, **dadurch gekennzeichnet, dass** diese eine Messerbett (1) nach Anspruch 12 aufweist, welches in einer ersten Orientierung und in einer zweiten Orientierung, welche gegenüber der ersten Orientierung 180° um eine Achse quer zur zentralen Achse (X) gedreht ist, in die Vorrichtung (11) einbaubar ist.

## Claims

1. Blade bed (1) for a device for comminuting organic substances, in particular for shredding fruits,
comprising a plurality of replaceable blade elements (2) which are arranged in a support structure (3, 4, 5, 6) in such a manner that at a working side (A) of the blade bed (1) they protrude over the support structure (3, 4, 5, 6) for cutting off or tearing off pieces of the organic substances which are moved in the intended use along the working side (A) transverse to the blade elements (2), wherein the protruding blade elements (2) describe a circular-cylinder-shaped outer surface around a central axis (X) or a part of such a circular-cylinder-shaped outer surface and wherein the longitudinal extents of the blade elements (2) extent transverse, in particular perpendicular to the circumferential direction of this circular-cylinder-shaped outer surface,
and comprising passages (7) between the blade elements (2) in order to discharge the pieces cut off or torn off by the blade elements (2) from the working side (A) of the blade bed (1) to a discharge side (b) of the blade bed (1),
wherein the individual blade elements (2), in each case by positive locking with the support structure (3, 4, 5, 6) in a direction pointing from the central axis (X) radially to the respective blade element (2) and in one or both circumferential directions of the circular-cylinder-shaped outer surface described by the protruding blade elements (2), are positioned in the support structure (3, 4, 5, 6),
**characterized in that** several blade elements (2) or all blade elements (2) are secured in their position in the support structure (3, 4, 5, 6) by common securing means (8a, 8b, 9), which in particular in a non-destructive manner can be removed and re-installed, and after a removal of these securing means (8a, 8b, 9) can individually be removed from the support structure (3, 4, 5, 6).

2. Blade bed (1) according to claim 1, **characterized in that** between the blade elements (2) there are arranged intermediate elements (10), which form surfaces between the blade elements (2) on which surfaces the organic substances, which in the intended use of the blade bed (1) are moved along the working side (A) transverse to the blade elements (2), can slide, and which surfaces form at least a part of the boundaries of the passages (7),
wherein the intermediate elements (10) are secured in their position in the support structure (3, 4, 5, 6) by means of the securing means (8a, 8b, 9) of the blade elements (2) and after a removal of these securing means (8a, 8b, 9) can individually be removed from the support structure (3, 4, 5, 6).

3. Blade bed (1) according to one of the preceding claims, **characterized in that** the individual intermediate elements (10), in each case by positive locking with the support structure (3, 4, 5, 6) in a direction pointing from the central axis (X) radially to the respective intermediate element (2) and in particular additionally in one or both circumferential directions of the circular-cylinder-shaped outer surface described by the protruding blade elements (2), are positioned in the support structure (3, 4, 5, 6).

4. Blade bed (1) according to one of the preceding claims, **characterized in that** the blade elements (2) and/or the intermediate elements (10) additionally by positive locking with the support structure (3, 4, 5, 6) in one or both directions transverse to the circumferential direction of the circular-cylinder-shaped outer surface described by the protruding blade elements (2) are positioned in the support structure (3, 4, 5, 6).

5. Blade bed (1) according to one of the preceding claims, **characterized in that** the boundaries of the passages (7) in each case are formed in part by the blade elements (2).

6. Blade bed (1) according to one of the preceding claims, **characterized in that** the passages (7) in each case are arranged inversely on both sides of each of the blade elements (2).

7. Blade bed (1) according to one of the preceding claims, **characterized in that** the blade elements (2) and/or the intermediate elements (10) in each case in the region of their both ends as well as in a central region between their both ends, by positive locking with the support structure (3, 4, 5, 6) in a direction pointing from the central axis (X) radially to the respective element (2, 10) and in one or in both circumferential directions of the circular-cylinder-shaped outer surface described by the protruding blade elements (2), are positioned in the support structure (3, 4, 5, 6).

8. Blade bed (1) according to one of the preceding claims, **characterized in that** at least the positive locking of the blade elements (2) and/or of the intermediate elements (10) with the support structure (3, 4, 5, 6) in the direction pointing from the central axis (X) radially to the respective element (2, 10) and in one or in both circumferential directions of the circular-cylinder-shaped outer surface described by the protruding blade elements (2) is accomplished **in that** they are inserted into recesses in the support structure (3, 4, 5, 6).

9. Blade bed (1) according to one of the preceding claims, **characterized in that** the securing means (8a, 8b, 9) are designed in such a way that they establish in the support structure a positive locking of the blade elements (2) and/or of the intermediate elements (10) with the support structure (3, 4, 5, 6) in a direction pointing from the the respective element (2, 10) to the central axis (X) and in one or in both directions transverse to the circumferential direction of the circular-cylinder-shaped outer surface described by the protruding blade elements (2).

10. Blade bed (1) according to one of the preceding claims, **characterized in that** the support structure (3, 4, 5, 6) is a built structure made of several parts, which by welding and/or screwing are connected with each other.

11. Blade bed (1) according to one of the preceding claims, **characterized in that** the support structure (3, 4, 5, 6) comprises at least three in particular identical support ribs (3), which by means of spacer elements (4, 5, 6) are connected together to form a rib structure.

12. Blade bed (1) according to one of the preceding claims, **characterized in that** blade bed comprises an axis of symmetry, which runs perpendicular to the central axis (X).

13. Blade bed (1) according to one of the preceding claims, **characterized in that** the protruding blade elements (2) describe a part of a circular-cylinder-shaped outer surface around a central axis (X) having a circumferential extent of less than 240°, in particular of less than 180°.

14. Set for forming a blade bed (1) according to one of the preceding claims, comprising a support structure (3, 4, 5, 6), blade elements (2) for being arranged in the support structure (3, 4, 5, 6) as well as securing means (8a, 8b, 9) for securing the blade elements in the support structure (3, 4, 5, 6).

15. Set according to claim 14, further comprising intermediate elements (10) for being arranged in the support structure (3, 4, 5, 6) and for being secured by means of the securing means (8a, 8b, 9) in the support structure (3, 4, 5, 6).

16. Set according to one of the claims 14 to 15, comprising several different sets of blade elements (2) and/or of intermediate elements (10) for optional arrangement in the support structure.

17. Device for comminuting organic substances, in particular for shredding fruits, comprising an in particular stationary blade bed (1) according to one of the claims 1 to 13.

18. Device (11) according to claim 17 comprising a blade bed (1) according to claim 13, **characterized in that** the blade bed (1) forms a lower part of a circumferential boundary of a drum chamber (12), to which the material that is to be comminuted can be fed via an axial opening and inside which a rotor (13) comprising driving elements (14) is arranged, by which driving elements in the intended operation the material fed into the drum chamber (12) can be moved along the working side (A) of the blade bed (1) transverse to the longitudinal extent of the blade elements (2), for cutting off or tearing off pieces from the fed material.

19. Device (11) according to one of the claims 17 to 18, **characterized in that** the blade bed (1) can be mounted and dismounted without tools.

20. Device (11) according to claim 19, **characterized in that** it comprises a blade bed (1) according to claim 12, which can be mounted in the device (11) in a first orientation and in a second orientation, which compared to the first orientation it rotated about an axis transverse to the central axis (X) by 180°.

## Revendications

1. Porte-couteaux (1) pour un dispositif de broyage de substances organiques, particulièrement pour hacher des fruits,
avec une pluralité d'éléments couteau (2) remplaçables, arrangés dans une structure portante (3, 4, 5, 6), de sorte qu'ils dépassent de la structure portante (3, 4, 5, 6) d'un côté d'opération (A) du porte-couteaux (1), afin de couper ou d'arracher des morceaux de substances organiques bougées le long du côté d'opération (A) transversalement par rapport aux éléments couteau (2) lors d'une manipulation conforme, les éléments couteau (2) saillants décrivant une surface enveloppante d'un cylindre circulaire autour d'un axe central (X) ou une partie d'une telle surface enveloppante d'un cylindre circulaire, les extensions des éléments couteau (2) s'étendant transversalement, particulièrement perpendiculairement, par rapport à la direction circonférentielle de cette surface enveloppante d'un cylindre circulaire,
et avec des ouvertures de passage (7) entre les éléments couteau (2) pour dégager les morceaux coupés ou arrachés par les éléments couteau (2) à partir du côté d'opération (A) du porte-couteaux (1) jusqu'un côté de dégagement (B) du porte-couteaux (1),
chaque élément couteau (2) étant positionné dans la structure portante (3, 4, 5, 6) par engagement positif avec la structure portante (3, 4, 5, 6) dans une direction orientée à partir de l'axe central (X) radialement vers l'élément couteau (2) et dans une ou les deux directions circonférentielles de la surface enveloppante d'un cylindre circulaire décrite par les éléments couteau saillants (2),
**caractérisé en ce que** plusieurs éléments couteau (2) ou tous les éléments couteau (2) sont bloqués dans leur position dans la structure portante (3, 4, 5, 6) à l'aide d'éléments de blocage (8a, 8b, 9) communs, particulièrement démontables de manière non-destructive, et remontables et sont amovibles de la structure portante (3, 4, 5, 6) après un démontage de ces éléments de blocage (8a, 8b, 9).

2. Porte-couteaux (1) selon la revendication 1, **caractérisé en ce que** des éléments intermédiaires (10) sont arrangés entre les éléments couteau (2), formant des surfaces entre les éléments couteau (2), sur lesquelles les substances organiques, bougées le long du côté d'opération (A) transversalement aux éléments couteau (2) lors d'une manipulation conforme du porte-couteaux (1), peuvent glisser,
les éléments intermédiaires (10) étant bloqués dans leur position dans la structure portante (3, 4, 5, 6) par les moyens de blocage (8a, 8b, 9) et étant démontables chacun pour soi de la structure portante (3, 4, 5, 6) après un démontage de ces moyens de blocage (8a, 8b, 9).

3. Porte-couteaux (1) selon l'une des revendications précédentes, **caractérisé en ce que** chaque élément intermédiaire (10) est positionné dans la structure portante (3, 4, 5, 6) par engagement positif avec la structure portante (3, 4, 5, 6) dans une direction à partir de l'axe central (X) radialement vers le correspondant élément intermédiaire (2) et particulièrement additionnellement dans une ou les deux directions circonférentielles de la surface enveloppante d'un cylindre circulaire décrite par les éléments couteau saillants (2).

4. Porte-couteaux (1) selon l'une des revendications précédentes, **caractérisé en ce que** les éléments couteau (2) et/ou les éléments intermédiaires (10) sont additionnellement positionnés dans la structure portante (3, 4, 5, 6) par engagement positif avec la structure portante (3, 4, 5, 6) dans une ou les deux directions circonférentielles de la surface enveloppante d'un cylindre circulaire décrite par les éléments couteau saillants (2).

5. Porte-couteaux (1) selon l'une des revendications précédentes, **caractérisé en ce que** les limitations des ouvertures de passage (7) sont chacune partiellement formées par les éléments couteau (2).

6. Porte-couteaux (1) selon l'une des revendications précédentes, **caractérisé en ce que** les ouvertures de passage (7) sont chacune disposées selon une symétrie en miroir des deux côtés de chaque élément couteau (2).

7. Porte-couteaux (1) selon l'une des revendications précédentes, **caractérisé en ce que** les éléments couteau (2) et/ou les éléments intermédiaires (10) sont chacun positionnés dans la structure portante (3, 4, 5, 6) dans la région de leurs deux extrémités et dans une région moyenne entre leur deux extrémités par engagement positif avec la structure portante (3, 4, 5, 6) dans une direction à partir de l'axe central (X) radialement vers le correspondant élément (2, 10) et dans une ou les deux directions circonférentielles de la surface enveloppante d'un cylindre circulaire décrite par les éléments couteau saillants (2).

8. Porte-couteaux (1) selon l'une des revendications précédentes, **caractérisé en ce qu'**au moins l'engagement positif des éléments couteau (2) et/ou des éléments intermédiaires (10) dans une direction à partir de l'axe central (X) radialement vers le correspondant élément (2, 10) et dans une ou les deux directions circonférentielles de la surface enveloppante d'un cylindre circulaire décrite par les éléments couteau (2) saillants est réalisé de sorte qu'ils sont insérés dans des cavités dans la structure portante (3, 4, 5, ,6).

9. Porte-couteaux (1) selon l'une des revendications précédentes, **caractérisé en ce que** les moyens de blocage (8a, 8b, 9) sont adaptés à créer un engagement positif des éléments couteau (2) et/ou des éléments intermédiaires (10) avec la structure portante (3, 4, 5, 6) dans une direction à partir du respectif élément (2, 10) vers l'axe central (X) et dans une ou les deux directions circonférentielles de la surface enveloppante d'un cylindre circulaire décrite par les éléments couteau saillants (2).

10. Porte-couteaux (1) selon l'une des revendications précédentes, **caractérisé en ce que** la structure portante (3, 4, 5, 6) est une structure construite avec une pluralité de pièces mutuellement connectées par soudage et/ou vissage.

11. Porte-couteaux (1) selon l'une des revendications précédentes, **caractérisé en ce que** la structure portante (3, 4, 5, 6) a au moins trois nervures porteuses (3), particulièrement identiques, mutuellement connectées à l'aide des éléments d'écartement (4, 5, 6) pour former une structure de nervures.

12. Porte-couteaux (1) selon l'une des revendications précédentes, **caractérisé en ce que** le porte-couteaux a une axe de symétrie perpendiculaire sur l'axe centrale (X).

13. Porte-couteaux (1) selon l'une des revendications précédentes, **caractérisé en ce que** les éléments couteau (2) saillants décrivent une section d'une surface enveloppante d'un cylindre circulaire autour d'un axe central (X) avec une extension circonférentielle inférieure à 240°, particulièrement inférieure à 180°.

14. Set pour former un porte-couteaux (1) selon l'une des revendications précédentes, comprenant une structure portante (3, 4, 5, 6), des éléments couteau (2) pour l'arrangement dans la structure portante (3, 4, 5, 6) et des moyen de blocage (8a, 8b, 9) pour bloquer les éléments couteau (2) dans la structure portante (3, 4, 5, 6).

15. Set selon la revendication 14, en outre comprenant des éléments intermédiaires (10) pour l'arrangement dans la structure portante (3, 4, 5, 6) et pour le blocage dans la structure portante (3, 4, 5, 6) à l'aide des éléments de blocage (8a, 8b, 9).

16. Set selon l'une des revendications 14 à 15, comprenant plusieurs sets d'éléments couteau (2) et/ou d'éléments intermédiaires (10) pour l'arrangement optionnel dans la structure portante.

17. Dispositif de broyage des substances organiques, particulièrement pour hacher des fruits, comprenant un porte-couteaux (1), particulièrement fixe, selon l'une des revendications 1 à 13.

18. Dispositif (11) selon la revendication 17 avec un porte-couteaux (1) selon la revendication 13, **caractérisé en ce que** le porte-couteaux (1) forme une partie inférieure d'une limitation circonférentielle d'un espace de tambour (12), dans lequel le matériau à broyer peut être alimenté à travers une ouverture axiale et dans lequel un rotor (13) avec des éléments d'entraînement (14) est arrangé, à l'aide duquel le matériau inséré dans l'espace de tambour (12) peut être bougé le long du côté d'opération (A) du porte-couteaux (1) da manière transversale par rapport à l'extension longitudinale des éléments couteau (2) lors d'une manipulation conforme, afin de couper ou arracher des morceaux d'un matériau inséré.

19. Dispositif (11) selon l'une des revendications 17 à 18, **caractérisé en ce que** le porte-couteaux (1) peut être monté et démonté sans des outils.

20. Dispositif (11) selon la revendication 19, **caractérisé en ce qu'**il a un porte-couteaux (1) selon la revendication 12, qui peut être monté dans le dispositif (11) avec une première orientation et avec une deuxième orientation pivotée à 180° par rapport à la première orientation, autour d'un axe transversale à l'axe central (X).
